# EUROPÄISCHE PATENTSCHRIFT

(11) **EP 2 207 659 B1**
(45) Veröffentlichungstag und Bekanntmachung des Hinweises auf die Patenterteilung: **29.02.2012**
(21) Anmeldenummer: 08803073.9
(22) Anmeldetag: 18.08.2008
(51) Int. Cl.: B29C 37/00, B29C 45/16, B29C 45/73

(54) **VERFAHREN UND ANLAGE ZUR HERSTELLUNG VON BESCHICHTETEN FORMKÖRPERN**
METHOD AND APPARATUS FOR THE PRODUCTION OF COATED MOLDINGS
PROCÉDÉ ET INSTALLATION DE FABRICATION DE CORPS MOULÉS REVÊTUS

(30) Priorität: 25.10.2007 DE 102007051482
(43) Veröffentlichungstag der Anmeldung: 21.07.2010
(73) Patentinhaber: Evonik Röhm GmbH, 64293 Darmstadt (DE); KraussMaffei Technologies GmbH, 80997 München (DE)
(72) Erfinder: SCHMIDT, Arne, 64287 Darmstadt (DE); EBERLE, Christian, 64347 Griesheim (DE); POTH, Marc, 64354 Reinheim (DE); ALBRECHT, Klaus, 55129 Mainz (DE); BÜRKLE, Erwin, 83671 Benediktbeuern (DE); EICHLSEDER, Martin, 94167 Tettenweis (DE)
(86) Internationale Anmeldenummer: PCT/EP2008/060783
(87) Internationale Veröffentlichungsnummer: WO 2009/053130

(56) Entgegenhaltungen:
- EP-A- 1 207 031
- EP-A- 1 366 882
- EP-A- 1 640 134
- EP-A- 1 666 225
- WO-A2-01/38062
- DE-A1- 10 136 678
- JP-A- 2003 019 731
- US-A- 3 804 362
- US-A- 4 439 492
- US-A- 5 705 793

## Beschreibung

Die vorliegende Erfindung betrifft ein Verfahren zur Herstellung von beschichteten Formkörpern. Des Weiteren beschreibt die vorliegende Erfindung eine Anlage zur Durchführung dieses Verfahrens.

Thermoplastische Kunststoff-Formmassen, die beispielsweise auf Polymethylmethacrylat (PMMA) basieren können, werden für verschiedenste Anwendungen eingesetzt. Hierzu werden die Massen zu Formteilen extrudiert oder spritzgegossen.

Die Formteile werden heutzutage vielfach zur Herstellung von stark beanspruchten Teilen eingesetzt, wie beispielsweise verschiebbare Teile (Automobil im Innen- und Außenbereich, Abdeckungen von elektronischen Geräten wie Handy-, Computer-, Organizer, MP3 - Player- oder Fernseherabdeckungen), gedeckt eingefärbte Anbauteile (z.B. in der Automobilindustrie: Außenspiegel, Säulenverkleidungen, Spiegeldreiecke) oder gedeckt eingefärbte Gebrauchsgegenstände. Die Oberfläche der so eingesetzten Formteile neigt aufgrund der hohen Beanspruchung zur Ausbildung von Kratzern, die optisch vielfach nicht akzeptabel sind. Hierbei sind Formkörper, die über Spritzguss hergestellt wurden, besonders kratzempfindlich. Auch kann die Farbe der hergestellten Formkörper aufgrund ökonomischer Aspekte nur sehr schwer variiert werden, um so beispielsweise bei der Herstellung eine einfache Farbanpassung der Anbauteil an das jeweilige Automobil zu ermöglichen.

Darüber hinaus können weitere Eigenschaften der Formkörper durch eine Modifikation der Oberfläche verändert werden. Beispielsweise kann ein Formkörper mit einer hydrophoben oder hydrophilen Beschichtung versehen werden, um beispielsweise die Benetzbarkeit mit Wasser oder anderen Flüssigkeiten zu verändern. Weiterhin kann die Oberfläche eines Formkörpers verspiegelt oder reflexionsmindernd ausgestaltet werden. Darüber hinaus können diese Formkörper auch schmutzabweisende oder antibakterielle Eigenschaften aufweisen, die vielfach durch eine Modifikation der Oberfläche erzielt werden.

Zur Verbesserung der Kratzfestigkeit, zur Farbanpassung, zur Modifikation der Hydrophobie/Hydrophilie der Oberfläche, der Reflexionseigenschaften sowie zur Ausstattung der Oberflächen mit antimikrobiellen und/oder schmutzabweisenden Eigenschaften können die zuvor dargelegten Formkörper mit Lackschichten versehen werden. Allerdings ist das klassische Aufbringen von Reaktivlacken relativ aufwendig und somit teuer. Zur Herstellung von Massenartikeln sind diese Verfahren kaum geeignet.

Aus diesem Grund wurden bereits Verfahren entwickelt, durch die eine Kratzfestschicht relativ kostengünstig mittels Spritzgussverfahren auf die Formkörper aufgebracht werden kann. Beispielsweise beschreiben die Druckschriften JP 11300776 und JP 2005074896 Spritzgussverfahren, bei welchen ein Formkörper mit einer Kratzfestschicht erhalten wird.

Die Druckschrift JP 11300776 (Dainippon Toryo, 1998) beschreibt einen zweistufigen RIM-Prozess. Zuerst wird durch Metathese-RIM von Dicyclopentadien ein Formkörper erhalten. Nach dem Aushärten wird der bewegliche Teil des RIM-Werkzeugs zurück gefahren, so dass ein definierter Spalt zwischen Formkörper und Form entsteht. In diesen Spalt wird in einem zweiten RIM-Prozess ein Coating-Material eingespritzt, das aus acrylfunktionalisierten Urethanoligomeren, Styrol, Diacrylatvernetzern sowie ggf. Füllstoffen und Pigmenten (TiO₂, Talkum) besteht und bei 95°C für 2min radikalisch ausgehärtet wird.

Das Dokument JP 2005074896 (Toyota Motor Corp.; Dainippon Toryo Co.) beschreibt ebenfalls einen RIM-Prozess. In einem ersten konventionellen Spritzgussschritt wird ein Kunststoff, insbesondere Polycarbonat (PC) zu einem flächigen Formteil verarbeitet. Das Werkzeug öffnet sich anschließend um einen geringen Spalt und binnen weniger Sekunden wird eine Reaktivlösung aus acrylatfunktionalisierten Urethanoligomeren, Acrylatvernetzern, Inhibitoren und einem organischen Peroxidinitiator eingespritzt und ausgehärtet. Bei 95°C ist die Aushärtung nach wenigen Sekunden vollständig und nach 90s wird der Verbundkörper entformt. Er weist eine gute Kratzfestigkeit, Verbundhaftung, Temperaturwechsel- und Warmwasserwechselbeständigkeit auf. Zwingend in allen Ansprüchen ist die Anwesenheit eines Urethanoligomers, das aus Isophorondiisocyanat- oder Bis(isocyanocyclohexyl)methan-Bausteinen aufgebaut ist.

Die zuvor dargelegten Formkörper weisen bereits gute Eigenschaften auf. Allerdings ist die Herstellung zeitintensiv, so dass das Verfahren insgesamt teuer ist. Eine vorzeitige Polymerisation des Reaktivgemischs in der Spritzgussvorrichtung stellt ein weiteres Problem des in den Druckschriften JP 11300776 und JP 2005074896 beschriebenen Spritzgussverfahrens dar, so dass kurze Taktzeiten durch diese Verfahren in einer Massenproduktion kaum zu erzielen sind.

Weitere Verfahren und Anlagen zur Herstellung von beschichteten Formkörpern sind in den Dokumenten JP2003 019731 und EP1666 225 A1 beschrieben.

Darüber hinaus treten vielfach Probleme mit den Standzeiten der Anlage auf, da die Spritzgussformen vielfach nicht ausreichend dicht gegenüber den Reaktivgemischen sind, so dass diese mit beweglichen Teilen der Anlage in Berührung kommen können.

Die zuvor dargelegten langen Taktzeiten können weiterhin zu Qualitätsproblemen der hergestellten Formkörper führen. Hierzu ist festzuhalten, dass die Formmassen in den Extrudern einer thermischen Belastung unterliegen, die zu einem Abbau der Polymere führen kann. Hierdurch können sich beispielsweise die mechanischen und optischen Eigenschaften der Formmassen, wie z.B. die Farbe, und hierdurch auch die der Formkörper ändern.

Weiterhin besteht ein dauerhaftes Bestreben die Kratzfestigkeit und die Witterungsstabilität der so erhaltenen Formkörper zu verbessern. Darüber hinaus besteht das Bedürfnis ein Verfahren zur Oberflächenmodifikation von Formkörpern anzugeben, durch welches die Oberflächeneigenschaften von Formkörpern an unterschiedlichste Vorgaben angepasst werden kann. So sollte das Verfahren insbesondere die Herstellung von hydrophoben oder hydrophilen Beschichtung ermöglichen, um beispielsweise die Benetzbarkeit mit Wasser oder anderen Flüssigkeiten zu verändern. Darüber hinaus sollte das Verfahren eine Verspiegelung oder eine Reflexionsminderung der Oberfläche ermöglichen. Des Weiteren sollte der Formkörper mit schmutzabweisenden oder antibakteriellen Eigenschaften ausgestaltet werden können.

Die Verringerung der Taktzeiten bei der Herstellung von spritzgegossenen, thermoplastischen Artikeln mittels erhöhter Aufheiz- und Abkühlraten des Spritzguß werkzeugs ist in der WO 01/380 62 A2 offenbart.

In Anbetracht des Standes der Technik war es nun Aufgabe der vorliegenden Erfindung, ein Verfahren zur Herstellung von beschichteten Formkörpern zur Verfügung zu stellen, das einfach und kostengünstig durchgeführt werden kann. Hierbei sollte der Formkörper mit möglichst kurzen Taktzeiten und, insgesamt gesehen, unter relativ geringem Energieverbrauch erhalten werden.

Weiterhin sollten durch das Verfahren Formkörpern mit hervorragenden mechanischen Eigenschaften erhalten werden können. Insbesondere sollten die Formkörper eine hohe Kratzfestigkeit und Härte zeigen. Darüber hinaus sollten die beschichteten Formkörper eine hohe Witterungs- und Chemikalienbeständigkeit aufweisen. Darüber hinaus sollte das Verfahren Formkörper mit einer hohen Präzision und gleich bleibend hoher Qualität herstellen können.

Darüber hinaus sollte das Verfahren eine möglichst hohe Standzeit einer Spritzgussanlage ermöglichen.

Gelöst werden diese sowie weitere nicht explizit genannte Aufgaben, die jedoch aus den hierin einleitend diskutierten Zusammenhängen ohne Weiteres ableitbar oder erschließbar sind, durch ein Verfahren mit allen Merkmalen des Patentanspruchs 1. Zweckmäßige Abwandlungen des erfindungsgemäßen Verfahrens werden in den auf Anspruch 1 rückbezogenen abhängigen Ansprüchen unter Schutz gestellt. Im Hinblick auf eine Anlage zur Durchführung des Verfahrens stellt Anspruch 16 eine Lösung der zugrunde liegenden Aufgabe zur Verfügung.

Gegenstand der vorliegenden Erfindung ist dementsprechend ein Verfahren zur Herstellung von beschichteten Formkörpern, bei dem man eine Formmasse in eine Spritzgussform spritzt und unter Erhalt eines Formkörpers abkühlt, die Spritzgussform so verändert, dass ein Zwischenraum zwischen zu beschichtender Oberfläche des Formkörpers und der Innenoberfläche der Spritzgussform entsteht, den entstandenen Zwischenraum durch Spritzguss mit einem Reaktivgemisch füllt, welches dadurch gekennzeichnet ist, dass zur Härtung des Reaktivgemischs die Temperatur mindestens eines Teiles der Spritzgussform innerhalb von 1 Minute um mindestens 5 °C erhöht wird.

Hierdurch gelingt es auf nicht vorhersehbare Weise ein Verfahren zur Herstellung von beschichteten Formkörpern zur Verfügung zu stellen, das einfach und kostengünstig durchgeführt werden kann. Hierbei kann der Formkörper mit sehr kurzen Taktzeiten und, insgesamt gesehen, unter relativ geringem Energieverbrauch erhalten werden.

Des Weiteren werden Formkörpern mit hervorragenden mechanischen Eigenschaften durch das erfindungsgemäße Verfahren erhalten. Insbesondere können die Formkörper eine hohe Kratzfestigkeit und Härte zeigen. Darüber hinaus können die Oberflächeneigenschaften von Formkörpern durch das erfindungsgemäße Verfahren auf eine Vielzahl unterschiedlicher Anforderungen angepasst werden. So kann das Verfahren insbesondere zur Herstellung von hydrophoben oder hydrophilen Beschichtung dienen, um beispielsweise die Benetzbarkeit mit Wasser oder anderen Flüssigkeiten zu verändern. Darüber hinaus kann eine Verspiegelung oder eine Reflexionsminderung der Oberfläche erzielt werden. Des Weiteren kann ein Formkörper durch das erfindungsgemäße Verfahren mit schmutzabweisenden oder antibakteriellen Eigenschaften ausgestaltet werden. Darüber hinaus weisen die beschichteten Formkörper eine hohe Witterungs- und Chemikalienbeständigkeit auf. Weiterhin können durch das Verfahren Formkörper mit einer hohen Präzision und gleich bleibend hoher Qualität hergestellt werden. So zeigen Formkörper, die gemäß dem erfindungsgemäßen Verfahren erhältlich sind, im Wesentlichen keine Risse oder ähnliche Mängel. Weiterhin zeigen diese Formkörper eine hohe Oberflächengüte.

Darüber hinaus ermöglicht das Verfahren eine hohe Standzeit einer Spritzgussanlage. Überraschend gelingt es insbesondere durch die Temperaturerhöhung zum Härten des Reaktivgemischs eine höhere Dichtigkeit der Anlage zu Erzielen. Wesentlich ist hierbei, dass die beweglichen Teile der Spritzgussanlage nicht durch das Härten des Reaktivgemischs beeinträchtigt werden. Dies ist insbesondere deshalb überraschend, weil die Viskosität der Reaktivmischung beim Erwärmen üblich abnimmt, so dass das Reaktivgemisch bei höheren Temperaturen üblich fließfähiger ist. Weiterhin kann durch die erfindungsgemäße Ausgestaltung ein thermischer Abbau der Formmassen im Extruder minimiert werden, so dass Formkörper mit einer hohen, gleich bleibenden Qualität erhalten werden.

Spritzgussverfahren sind seit langem bekannt und werden weithin eingesetzt. Im Allgemeinen wird hierbei eine Formmasse in eine Spritzgussform gespritzt und unter Erhalt eines Formkörpers abgekühlt.

Erfindungsgemäß erfolgt das Beschichten mit Vorteil durch eine Veränderung der Spritzgussform, wobei ein Zwischenraum zwischen zu beschichtender Oberfläche des Formkörpers und der Innenoberfläche der Spritzgussform entsteht. Der entstandene Zwischenraum kann durch Spritzguss mit einem Reaktivgemisch gefüllt werden.

Die zuvor dargelegten Schritte sind unter anderem in den Druckschriften JP 11300776 und JP 2005074896 ausführlicher dargelegt, die zu Zwecken der Offenbarung in die Anmeldung eingefügt werden.

Formmassen zur Herstellung des zu beschichtenden Formkörpers sind an sich bekannt, wobei diese Formmassen als obligatorische Komponente thermoplastisch verarbeitbare Polymere enthalten. Zu den bevorzugten Polymeren gehören beispielsweise Poly(meth)acrylate, insbesondere Polymethylmethacrylat (PMMA), Poly(meth)acrylimide, Polyacrylnitrile, Polystyrole, Polyether, Polyester, Polycarbonate, Polyvinylchloride. Hierbei sind Poly(meth)acrylate und Poly(meth)acrylimide bevorzugt. Diese Polymere können einzeln sowie als Mischung eingesetzt werden. Des Weiteren können diese Polymere auch in Form von Copolymeren vorliegen. Bevorzugte Copolymere sind unter anderem Styrol-Acrylnitril-Copolymere, Styrol-Maleinsäure-Copolymere und Polymethylmethacrylat-Copolymere, insbesondere Polymethylmethacrylat-Poly(meth)acrylimid-Copolymere.

Besonders bevorzugte Formmassen weisen mindestens 15 Gew.-%, vorzugsweise mindestens 50 Gew.-% und besonders bevorzugt mindestens 80 Gew.-% Polymethylmethacrylat, Polymethacrylmethylimid und/oder Polymethylmethacrylat-Copolymere auf, bezogen auf das gesamte Gewicht der Formmasse.

Die Formmassen der vorliegenden Erfindung können bevorzugt Poly(meth)acrylate enthalten. Der Ausdruck (Meth)acrylate umfasst Methacrylate und Acrylate sowie Mischungen aus beiden.

Poly(meth)acrylate sind Polymere, die durch Polymerisation einer Monomerenmischung erhältlich sind, die mindestens 60 Gew.-%, bevorzugt mindestens 80 Gew.-% (Meth)acrylate aufweist, bezogen auf das Gewicht der Monomeren.

Diese Monomere sind in der Fachwelt weithin bekannt und kommerziell erhältlich.

Zu diesen gehören unter anderem (Meth)acrylsäure und (Meth)acrylate, die sich von gesättigten Alkoholen ableiten, wie Methyl(meth)acrylat, Ethyl(meth)acrylat, Propyl(meth)acrylat, Butyl(meth)acrylat, Pentyl(meth)acrylat, Hexyl(meth)acrylat, 2-Ethylhexyl(meth)acrylat, Heptyl(meth)acrylat; (Meth)acrylate, die sich von ungesättigten Alkoholen ableiten, wie z. B. O-leyl(meth)acrylat, 2-Propinyl(meth)acrylat, Allyl(meth)acrylat, Vinyl(meth)acrylat usw.;
Amide und Nitrile der (Meth)acrylsäure, wie
N-(3-Dimethylaminopropyl)(meth)acrylamid,
N-(Diethylphosphono)(meth)acrylamid,
1-Methacryloylamido-2-methyl-2-propanol; Cycloalkyl(meth)acrylate, wie
3-Vinylcyclohexyl(meth)acrylat, Bornyl(meth)acrylat;
Hydroxylalkyl(meth)acrylate, wie
3-Hydroxypropyl(meth)acrylat,
3,4-Dihydroxybutyl(meth)acrylat,
2-Hydroxyethyl(meth)acrylat, 2-Hydroxypropyl(meth)acrylat;
Glycoldi(meth)acrylate, wie 1,4-Butandiol(meth)acrylat,
(Meth)acrylate von Etheralkoholen, wie
Tetrahydrofurfuryl(meth)acrylat, Vinyloxyethoxyethyl(meth)acrylat; und mehrwertige (Meth)acrylate, wie
Trimethyloylpropantri(meth)acrylat.

Neben den zuvor dargelegten (Meth)acrylaten können zur Herstellung der Poly(meth)acrylate auch weitere ungesättigte Monomere eingesetzt werden, die mit den zuvor genannten Methacrylaten copolymerisierbar sind. Im allgemeinen werden diese Verbindungen in einer Menge von 0 bis 40 Gew.-%, vorzugsweise 0 bis 20 Gew.-%, bezogen auf das Gewicht der Monomeren, eingesetzt,
wobei die Comonomere einzeln oder als Mischung verwendet werden können. Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid; und
Diene, wie beispielsweise Divinylbenzol.

Bevorzugte Poly(meth)acrylate sind durch Polymerisation von Mischungen erhältlich, die mindestens 20 Gew.-%, insbesondere mindestens 60 Gew.-% und besonders bevorzugt mindestens 80 Gew.-%, jeweils bezogen auf das Gesamtgewicht der zu polymerisierenden Monomere, Methylmethacrylat aufweisen. Diese Polymere werden im Rahmen der vorliegenden Erfindung als Polymethylmethacrylate bezeichnet. Bevorzugte Formmassen können verschiedene Poly(meth)acrylate enthalten, die sich beispielsweise im Molekulargewicht oder in der Monomerzusammensetzung unterscheiden.

Die Herstellung der (Meth)acrylat-Homo- und/oder Copolymere aus den zuvor dargelegten Monomeren nach den verschiedenen Verfahren der radikalischen Polymerisation ist an sich bekannt. So können die Polymere in Substanz-, Lösungs-, Suspensions- oder Emulsionspolymerisation hergestellt werden. Die Substanzpolymerisation ist beispielhaft in Houben-Weyl, Band E20, Teil 2 (1987), S. 1145ff. beschrieben. Wertvolle Hinweise hinsichtlich der Lösungspolymerisation finden sich eben dort auf S. 1156ff. Erläuterungen zur Suspensionspolymerisationstechnik finden sich eben dort auf S. 1149ff., während die Emulsionspolymerisation eben dort auf S. 1150ff. ausgeführt und erläutert wird.

Des Weiteren können bevorzugte Formmassen Poly(meth)acrylimide umfassen. Poly(meth)acrylimide weisen wiederkehrende Einheiten auf, die durch Formel (I) darstellbar sind, 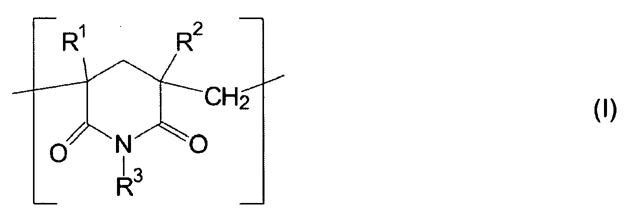 worin R¹ und R² gleich oder verschieden Wasserstoff oder eine Methylgruppe und R³ Wasserstoff oder ein Alkyl- oder Arylrest mit bis zu 20 Kohlenstoffatomen bedeuten.

Vorzugsweise bilden Einheiten der Struktur (I) mehr als 30 Gew.-%, besonders bevorzugt mehr als 50 Gew.-% und ganz besonders bevorzugt mehr als 80 Gew.-% des Poly(meth)acrylimids.

Die Herstellung von Poly(meth)acrylimiden ist an sich bekannt und beispielsweise in GB-PS 1 078 425, GB-PS 1 045 229, DE-PS 1 817 156 (= US-PS 3 627 711) oder DE-PS 27 26 259 (= US-PS 4 139 685) offenbart.

Darüber hinaus können diese Copolymerisate weitere Monomereeinheiten enthalten, die sich beispielsweise aus Estern der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid ergeben. Der Anteil der Comonomeren, die sich nicht oder nur sehr schwer cyclisieren lassen, soll 30 Gew.-%, vorzugsweise 20 Gew.-% und besonders bevorzugt 10 Gew.-%, bezogen auf das Gewicht der Monomeren, nicht übersteigen.

Bevorzugt können Formmassen eingesetzt werden, die Poly(N-methylmethacrylimide) (PMMI) und/oder Polymethylmethacrylate (PMMA) umfassen. Poly(N-methylmethacrylimide) (PMMI), Polymethylmethacrylate (PMMA) und/oder PMMI-PMMA-Copolymere sind vorzugsweise Copolymere von PMMI und PMMA, welche durch teilweise Cycloimidisierung des PMMA hergestellt werden. (PMMI, welches durch Teilimidisierung von PMMA hergestellt wird, wird üblicherweise so hergestellt, dass maximal 83 % des eingesetzten PMMA imidisiert werden. Das dabei entstehende Produkt wird als PMMI bezeichnet, ist streng genommen aber ein PMMI-PMMA-Copolymer.) Sowohl PMMA als auch PMMI oder PMMI-PMMA-Copolymere sind kommerziell erhältlich, z. B. unter dem Markennamen Pleximid der Firma Röhm. Ein beispielhaftes Copolymer (Pleximid 8803) hat 33 % MMI-Einheiten, 54,4 % MMA-Einheiten, 2,6 % Methacrylsäureeinheiten und 1,2 % Anhydrideinheiten. Die Produkte sowie ihre Herstellung sind bekannt (Hans R. Kricheldorf, Handbook of Polymer Synthesis, Part A, Verlag Marcel Dekker Inc. New York - Basel - Hongkong, S. 223 f.; H. G. Elias, Makromoleküle, Hüthig und Wepf Verlag Basel - Heidelberg - New York; US-PSS 2 146 209, 4 246 374).

Darüber hinaus können die Formmassen Styrol-Acrylnitril-Polymere (SAN) umfassen. Besonders bevorzugte Styrol-Acrylnitril-Polymere können durch die Polymerisation von Mischungen erhalten werden, die aus
70 bis 92 Gew.-% Styrol
8 bis 30 Gew.-% Acrylnitril und
0 bis 22 Gew.-% weiterer Comonomere, jeweils bezogen auf das Gesamtgewicht der zu polymerisierenden Monomere, bestehen.

Zur Verbesserung der Schlagzähigkeitswerte können den Formmassen Siliconkautschuk-Pfropfcopolymerisate beigemischt werden, die zusammengesetzt sind aus
0,05 bis 95 Gew.-%, bezogen auf das Gesamtgewicht des Copolymerisats, eines Kerns a) aus einem siliciumorganischen Polymer, das der allgemeinen Formel (R₂SiO_{2/2})ₓ·(RSiO_{3/2})_{y}·(SiO_{4/2})_{z} mit x = 0 bis 99,5 Mol-%, y = 0,5 bis 100 Mol-%, z = 0 bis 50 Mol-% entspricht, wobei R gleiche oder verschiedene Alkyl- oder Alkenyl-Reste mit 1 bis 6 C-Atomen, Aryl-Reste oder substituierte Kohlenwasserstoffreste bedeutet,
0 bis 94,5 Gew.-%, bezogen auf das Gesamtgewicht des Copolymerisats, einer Polydialkylsiloxan-Schicht b) und
5 bis 95 Gew.-%, bezogen auf das Gesamtgewicht des Copolymerisats, einer Hülle c) aus organischen Polymeren, der Kern a) vor der Pfropfung Vinylgruppen umfasst und die Hülle c) durch radikalische Polymerisation einer Mischung, die Acrylsäureester und Methacrylate umfasst, erhältlich ist.

Die erfindungsgemäßen Formmassen können des weiteren Acrylatkautschuk-Modifier enthalten. Überraschend kann hierdurch ein hervorragendes Schlagzähigkeitsverhalten bei Raumtemperatur (ca. 23°C) der Formkörper erzielt werden, die aus den Formmassen hergestellt wurden. Besonders wesentlich ist, dass die mechanischen und thermischen Eigenschaften, wie beispielsweise das E-Modul oder die Vicat-Erweichungstemperatur, auf sehr hohem Niveau erhalten bleiben. Wird versucht ein ähnliches Kerbschlagzähigkeitsverhalten bei Raumtemperatur nur durch die Verwendung von Acrylatkautschuk-Modifier oder Siliconkautschuk-Pfropfcopolymerisat zu erzielen, so nehmen diese Werte deutlicher ab.

Derartige Acrylatkautschuk-Modifier sind an sich bekannt. Es handelt sich hierbei um Copolymerisate, die eine Kern-Hülle-Struktur aufweisen, wobei der Kern und die Hülle einen hohen Anteil an den zuvor beschriebenen (Meth)acrylaten aufweisen.

Bevorzugte Acrylatkautschuk-Modifier weisen hierbei eine Struktur mit zwei Schalen auf, die sich in ihrer Zusammensetzung unterscheiden.

Besonders bevorzugte Acrylatkautschuk-Modifier haben unter anderem folgenden Aufbau:
- Kern:: Polymerisat mit einem Methylmethacrylatanteil von mindestens 90 Gew.-%, bezogen auf das Gewicht des Kerns.
- Schale 1:: Polymerisat mit einem Butylacrylatanteil von mindestens 80 Gew.-%, bezogen auf das Gewicht der ersten Schale.
- Schale 2:: Polymerisat mit einem Methylmethacrylatanteil von mindestens 90 Gew.-%, bezogen auf das Gewicht der zweiten Schale.

Beispielsweise kann ein bevorzugter Acrylatkautschuk-Modifier folgenden Aufbau aufweisen:
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacr-dat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)

Das Verhältnis von Kern zu Schale(n) der Acrylatkautschuk-Modifier kann in weiten Bereichen schwanken. Vorzugsweise liegt das Gewichtsverhältnis Kern zu Schale K/S im Bereich von 20:80 bis 80:20, bevorzugt von 30:70 zu 70:30 bis Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Acrylatkautschuk-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Gemäß einem besonderen Aspekt der vorliegenden Erfindung liegt das Gewichtsverhältnis von Siliconkautschuk-Pfropfcopolymerisat zu Acrylatkautschuk-Modifier im Bereich von 1:10 bis 10:1, vorzugsweise von 4:6 bis 6:4.

Besondere Formmassen bestehen vorzugsweise aus
f1) 20 bis 95 Gew.-% Poly(meth)acrylate,
f2) 0 bis 45 Gew.-% Styrol-Acrylnitril-Polymere,
f3) 5 bis 60 Gew.-% Siliconkautschuk-Pfropfcopolymerisate
f4) 0 bis 60 Gew.-% auf Acrylatkautschuk basierende Schlagzähmodifier, jeweils bezogen auf das Gewicht der Komponenten f1 bis f4,
und üblichen Additiven und Zuschlagsstoffen.

Darüber hinaus können die zu polymerisierenden Zusammensetzungen, die Formmassen, bzw. die hieraus erhältlichen Formkörpern weitere weithin bekannte Additive enthalten. Zu diesen Additiven gehören unter anderem Molekulargewichtsregler, Trennmittel, Antistatika, Antioxidantien, Entformungsmittel, Flammschutzmittel, Schmiermittel, Farbstoffe, Fließverbesserungsmittel, Füllstoffe, Lichtstabilisatoren, Pigmente, Verwitterungsschutzmittel und Weichmacher.

Die Zusatzstoffe werden in üblicher Menge, d. h. bis zu 80 Gew.-%, vorzugsweise bis zu 30 Gew.-%, bezogen auf die Gesamtmasse eingesetzt. Ist die Menge größer als 80 Gew.-%, bezogen auf die Gesamtmasse, so können Eigenschaften der Kunststoffe wie beispielsweise die Verarbeitbarkeit gestört werden.

Das Gewichtsmittel des Molekulargewichts M_{w} der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Reaktivgemische bezeichnen im Rahmen der vorliegenden Erfindung Zusammensetzungen, die durch radikalische Polymerisation gehärtet werden können. Unter Bedingungen des Spritzgusses können diese Zusammensetzungen in die Spritzgussform gespritzt werden, so dass diese Zusammensetzungen bei diesen Bedingungen zumindest zeitweise fließfähig sind. Reaktivgemische, die zur Beschichtung eingesetzt werden können, werden unter anderem in den Druckschriften JP 11300776 und JP 2005074896 dargelegt. Auf diese Druckschriften wird zu Zwecken der Offenbarung Bezug genommen, wobei die in diesen Druckschriften beschriebenen Zusammensetzungen in die vorliegende Anmeldung aufgenommen werden.

Besondere Vorteile können insbesondere mit Reaktivgemischen erzielt werden, die mindestens 40 Gew.-%, vorzugsweise mindestens 60 Gew.-% und besonders bevorzugt mindestens 90 Gew.-% an (Meth)acrylaten mit mindestens zwei Doppelbindungen, bezogen auf das Gesamtgewicht des Reaktivgemischs, aufweisen. Der Begriff "Doppelbindung" bezeichnet insbesondere Kohlenstoff-Kohlenstoff-Doppelbindungen, die radikalisch polymerisierbar sind. Der Ausdruck "(Meth)acrylat" steht für Acrylat, Methacrylat sowie Mischungen aus beiden. (Meth)acrylaten mit mindestens zwei Doppelbindungen sind auch als vernetzende Monomere bekannt. Zu diesen gehören insbesondere (Meth)acrylate mit zwei Doppelbindungen, wie beispielsweise (Meth)acrylate, die sich von ungesättigten Alkoholen ableiten, wie z. B. 2-Propinyl(meth)acrylat, Allyl(meth)acrylat, Vinyl(meth)acrylat, sowie (Meth)acrylate, die sich von Diolen oder höherwertigen Alkoholen ableiten, wie z.B. Glycoldi(meth)acrylate, wie Ethylenglycoldi(meth)acrylat, Diethylenglycoldi(meth)acrylat, Triethylenglycoldi(meth)acrylat, Tetra- und Polyethylenglycoldi(meth)acrylat, 1,3- Butandiol(meth)acrylat, 1,4-Butandiol(meth)acrylat, 1,6-Hexandioldi(meth)acrylat, Glycerindi(meth)acrylat und Diurethandimethacrylat; (Meth)acrylate mit drei oder mehr Doppelbindungen, wie z.B. Glycerintri(meth)acrylat, Trimethylolpropantri(meth)acrylat, Pentaerythrittetra(meth)acrylat und Dipentaerythritpenta(meth)acrylat.

Besonders bevorzugte (Meth)acrylate mit mindestens zwei Doppelbindungen sind insbesondere 1,6-Hexandioldiacrylat, Trimethylolpropantriacrylat, Pentaerythrittetraacrylat und Dipentaerythritpentaacrylat.

Gemäß einer besonderen Abwandlung kann das Reaktivgemisch mindestens ein (Meth)acrylat mit drei oder mehr Doppelbindungen umfassen. Vorzugsweise beträgt der Anteil an (Meth)acrylaten mit drei oder mehr Doppelbindungen mindestens 10 Gew.-%, besonders bevorzugt mindestens 25 Gew.-%, insbesondere bevorzugt mindestens 50 Gew.-% und ganz besonders bevorzugt mindestens 90 Gew.-%, bezogen auf das Gewicht des Reaktivgemischs.

Von besonderem Interesse sind des Weiteren Reaktivgemische, die höchstens 90 Gew.-%, besonders bevorzugt höchstens 75 Gew.-%, insbesondere bevorzugt höchstens 50 Gew-% und ganz besonders bevorzugt höchstens 7 Gew.-% an Monomeren mit zwei oder weniger Doppelbindungen umfassen.

Gemäß einer besonderen Ausführungsform umfasst das Reaktivgemisch vorzugsweise 1,6-Hexandioldiacrylat, Trimethylolpropantriacrylat und/oder Pentaerythrittetraacrylat. Von besonderem Interesse sind insbesondere Reaktivgemische, die Trimethylolpropantriacrylat und Pentaerythrittetraacrylat umfassen, wobei das Gewichtsverhältnis von Trimethylolpropantriacrylat zu Pentaerythrittetraacrylat vorzugsweise im Bereich von 10:1 bis 1:10, bevorzugt im Bereich von 5:1 bis 1:5, insbesondere bevorzugt im Bereich von 3:1 bis 1:3 und ganz besonders bevorzugt im Bereich von 2:1 bis 1:2 liegen kann.

Gemäß einer weiteren Ausgestaltung umfasst das Reaktivgemisch vorzugsweise Trimethylolpropantriacrylat und 1,6-Hexandioldiacrylat, wobei das Gewichtsverhältnis von Trimethylolpropantriacrylat zu 1,6-Hexandioldiacrylat vorzugsweise im Bereich von 10:1 bis 1:10, bevorzugt im Bereich von 5:1 bis 1:5, insbesondere bevorzugt im Bereich von 3:1 bis 1:3 und ganz besonders bevorzugt im Bereich von 2:1 bis 1:2 liegen kann.

Von besonderem Interesse sind weiterhin Reaktivgemische, die vorzugsweise Pentaerythrittetraacrylat und 1,6-Hexandioldiacrylat umfassen. Zweckmäßig kann das Gewichtsverhältnis von Pentaerythrittetraacrylat zu 1,6-Hexandioldiacrylat im Bereich von 10:1 bis 1:10, bevorzugt im Bereich von 5:1 bis 1:5, insbesondere bevorzugt im Bereich von 3:1 bis 1:3 und ganz besonders bevorzugt im Bereich von 2:1 bis 1:2 liegen.

Reaktivgemische, die Pentaerythrittetraacrylat und/oder Trimethylolpropantriacrylat umfassen, zeigen überraschend eine besonders hohe Kratzfestigkeit, die insbesondere mit dem Anteil an Pentaerythrittetraacrylat zunimmt. Reaktivgemische, die 1,6-Hexandioldiacrylat und/oder Trimethylolpropantriacrylat umfassen, zeigen eine besonders hohe UV-Stabilität, die insbesondere durch den Xenontest bestimmt werden kann. So behalten Mischungen mit einem hohen Anteil an 1,6-Hexandioldiacrylat auch nach einer Xenonbestrahlung eine hohe Kratzfestigkeit gemäß dem Reibradtest bei.

Die Kratzfestigkeit der Beschichtung ist unter anderem abhängig von der Anzahl an polymerisierbaren Doppelbindungen, bezogen auf das Gewicht des Gemischs. Je höher dieser Anteil, desto höher die Kratzfestigkeit, die die Beschichtung erzielen kann. Vorzugsweise kann das Reaktivgemisch dementsprechend mindestens 1 Mol an Doppelbindung pro 120 g Reaktivgemisch, besonders bevorzugt mindestens 1 Mol an Doppelbindung pro 105 g Reaktivgemisch aufweisen. Hierbei kann die Kratzfestigkeit insbesondere durch die Verwendung von (Meth)acrylaten mit drei oder mehr Doppelbindungen gesteigert werden.

Das Reaktivgemisch kann insbesondere in Reaktivspritzgussverfahren eingesetzt werden. Dementsprechend weist das Gemisch eine Viskosität auf, die einen derartigen Einsatz ermöglicht. Vorzugsweise liegt die dynamische Viskosität des Reaktivgemischs im Bereich von 1 bis 200 mPa*s bei 25°C, besonders bevorzugt im Bereich von 5 bis 50 mPa*s bei 25°C, wobei die dynamische Viskosität gemäß Brookfield (mit UL-Adapter). bestimmt werden kann.

Zur Härtung umfasst das Reaktivgemisch mindestens einen Initiator, durch den die Monomere radikalisch polymerisiert werden können. Hierbei werden thermische Initiatoren eingesetzt, die durch Wärmeeinwirkung Radikale bilden.

Geeignete thermische Initiatoren sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Zweckmäßig kann das Reaktivgemisch 0,01 Gew.-% bis 3 Gew.-%, vorzugsweise 0,1 Gew.-% bis 2,5 Gew.-% und besonders bevorzugt 0,5 Gew.-% bis 1,5 Gew.-% thermischen Initiator, bezogen auf das Gewicht des Reaktivgemischs, umfassen.

Zusätzlich zu den thermischen Initiatoren kann ein Reaktivgemisch Fotoinitiatoren umfassen, die bei Bestrahlung mit elektromagnetischen Wellen eine radikalische Polymerisation auslösen. Überraschend können durch die Verwendung von Reaktivgemischen, die sowohl thermische Initiatoren als auch Fotoinitiatoren umfassen, besondere Vorteile erzielt werden. Zu diesen Vorteilen zählen insbesondere kurze Taktzeiten bei der Herstellung der beschichteten Formkörper sowie eine besonders hohe Witterungsstabilität, Kratzfestigkeit und Haftfestigkeit der Beschichtung.

Zu den bevorzugten Fotoinitiatoren gehören unter anderem αα-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Irgacure 184), Bis(2,4,6-trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Der Anteil an Fotoinitiator ist an sich nicht kritisch. Vorzugsweise weist das Reaktivgemisch 0 Gew.-% bis 10 Gew.-%, besonders bevorzugt 0,3 Gew.-% bis 5 Gew.-% und ganz besonders bevorzugt 0,7 Gew.-% bis 2,3 Gew.-% Fotoinitiator, bezogen auf das Gewicht des Reaktivgemischs, auf.

Gemäß einer bevorzugten Abwandlung kann das Gewichtsverhältnis von Fotoinitiator zu thermischen Initiator im Bereich von 20:1 bis 1:5, bevorzugt im Bereich 15:1 bis 1:1 und besonders bevorzugt im Bereich 10:1 bis 2:1 liegen.

Neben den zuvor genannten Bestandteilen kann das Reaktivgemisch ein Gleitmittel umfassen. Hierdurch gelingt es überraschend die Entformbarkeit des beschichteten Formkörpers zu verbessern, ohne dass die Haftfestigkeit auf kritische Werte herabgesetzt werden würde. Als Hilfsstoffe können demnach Gleitmittel, z. B. ausgewählt aus der Gruppe der Polysiloxane, der gesättigten Fettsäuren mit weniger als C₂₀, bevorzugt C₁₆ bis C₁₈ Kohlenstoffatomen oder der gesättigten Fettalkohole mit weniger als C₂₀, bevorzugt C₁₆ bis C₁₈ Kohlenstoffatomen enthalten sein. Bevorzugt sind geringe Mengenanteile von höchstens 0,25, z. B. 0,05 bis 0,2 Gew.-%, bezogen auf das Gewicht des Reaktivgemischs enthalten. Geeignet sind z. B. Stearinsäure, Palmitinsäure, technische Gemische aus Stearin- und Palmitinsäure. Zweckmäßig sind darüber hinaus Polysiloxane, die acryliert sind, wie zum Beispiel 13/6/αω2-Hexylacrylsiloxan, wobei diese Verbindung beispielsweise unter der Handelsbezeichnung RC 725 von der Fa. Goldschmidt GmbH erhalten werden kann. Polysiloxane können auch in höheren Mengen eingesetzt werden. Zweckmäßig sind beispielsweise Anteile von höchstens 10 Gew.-%, bevorzugt von höchstens 1 Gew.-% und ganz besonders bevorzugt von höchstens 0,5 Gew.-%. Weiterhin geeignet sind z. B. n-Hexadecanol, n-Octadecanol, sowie technische Gemische aus n-Hexadecanol und n-Octadecanol. Ein besonders bevorzugtes Gleit- bzw. Formtrennmittel ist Stearylalkohol.

Weiterhin kann das Reaktivgemisch übliche Additive, wie Farbmittel, Pigmente, beispielsweise Metallic-Pigmente, UV-Stabilisatoren, Füllstoffe oder Nanomaterialien, insbesondere ITO-Nanopartikel umfassen. Der Anteil dieser Additive ist von der beabsichtigten Anwendung abhängig und kann daher in weiten Bereichen liegen. Vorzugsweise kann dieser Anteil, falls Additive enthalten sind, 0 bis 30 Gew.-%, besonders bevorzugt 0,1 bis 5 Gew.-% betragen.

Die Dicke der Beschichtung ist vielfach von der Art des Reaktivgemischs und des Formkörpers abhängig. Die Herstellung von sehr dünnen Beschichtungen ist vielfach technisch sehr anspruchsvoll. Andererseits zeigen sehr dicke Beschichtungen häufig eine starke Neigung zu Rissbildungen, wobei die Haftfestigkeit teilweise abnimmt. Von besonderem Interesse sind daher beschichtete Formkörper, deren Beschichtung vorzugsweise eine Dicke im Bereich von 1 µm bis 100 µm, bevorzugt 5 µm bis 75 µm, besonders bevorzugt 8 µm bis 50 µm, insbesondere besonders bevorzugt 10 µm bis 40 µm und ganz besonders bevorzugt 15 µm bis 30 µm aufweist. Die Dicke der Beschichtung kann über die Größe des Zwischenraums zwischen zu beschichtender Oberfläche des Formkörpers und der Innenoberfläche der Spritzgussform eingestellt werden.

Die Temperatur bei der die Formmasse in die Spritzgussform gespritzt wird, hängt insbesondere von der Art des Polymeren sowie der Additive ab. Diese Verarbeitungstemperaturen sind dem Fachmann bekannt. Im Allgemeinen wird die Formmasse bei einer Temperatur im Bereich von 150 bis 350°C, bevorzugt 220 bis 330°C in die Spritzgussform gespritzt.

Die Temperatur des Werkzeugs kann ebenfalls auf die für die jeweilige Formmasse übliche Temperatur eingestellt werden. Vorzugsweise kann die Formmasse auf eine Temperatur im Bereich von 40 bis 160°C, besonders bevorzugt 70 bis 150°C und ganz besonders bevorzugt 60 bis 80°C abgekühlt werden, bevor das Reaktivgemisch in den Zwischenraum einspritzt wird.

Die Temperatur bei der die thermische Härtung des Reaktivgemischs erfolgt, ist von der Art des thermischen Initiators abhängig. Von besonderem Interesse sind insbesondere Verfahren, bei denen die thermische Härtung vorzugsweise bei einer Temperatur im Bereich von 95 bis 180°C, bevorzugt 100 bis 140°C und ganz besonders bevorzugt im Bereich 105 bis 130°C in der Spritzgussform erfolgt. Falls die Temperatur bei der thermischen Härtung zu hoch ist, kann eine Bildung von Rissen eintreten. Bei zu geringen Temperaturen zeigt die Beschichtung vielfach eine zu hohe Haftung an dem Metall des Spritzgusswerkzeugs, wobei teilweise auch die Kratzfestigkeit durch eine höhere Temperatur bei der thermischen Härtung verbessert werden kann. Die zuvor dargelegten Bereiche haben sich als besonders zweckmäßig erwiesen, ohne dass hierdurch eine Beschränkung erfolgen soll.

Erfindungsgemäß wird zur Härtung des Reaktivgemischs die Temperatur mindestens eines Teiles der Spritzgussform erhöht. Überraschend gelingt hierdurch eine Härtung der Beschichtung, ohne dass der zunächst erhalten Formkörper nachteilig beeinflusst wird. Besonders vorteilhaft wird die Spritzgussform zur Härtung der Beschichtung nur teilweise erwärmt. Gemäß einer zweckmäßigen Abwandlung wird vorteilhaft ein Teil der Spritzgussform erwärmt, der mit der Reaktivmischung in Berührung steht, und ein Teil der Spritzgussform, der nicht mit der Reaktivmischung in Berührung steht, nicht erwärmt.

In diesem Zusammenhang ist festzuhalten, dass der hierin gebrauchte Begriff "Spritzgussform" in der Fachwelt bekannt ist. Hierunter wird im Allgemeinen das Teil einer Spritzgussanlage verstanden, welches zur Formgebung notwendig ist. Dieses Teil bildet eine Kavität, welche mit Formmasse gefüllt werden kann. Nach dem Abkühlen der Formmasse kann die Spritzgussform zerstörungsfrei geöffnet werden, so dass der erhaltene Formkörper aus der Spritzgussform entnommen werden kann. Daher umfasst die Spritzgussform üblich bewegliche Teile, die ein derartiges Öffnen ermöglichen. Zur Formgebung weist die Spritzgussform üblich ein Metallteil auf, welches mit der Formmasse in Berührung kommt, so dass dieses Teil bzw. die Oberfläche dieses Teils für die Formgebung von entscheidender Bedeutung ist. Für die erfindungsgemä-βen Zwecke wird unter dem Begriff der Spritzgussform insbesondere das formgebende Teil verstanden, wobei dieses aus mehreren Teilen zusammengesetzt sein kann. Die zuvor dargelegte Erwärmung bedeutet, dass das mit dem Reaktivgemisch in Berührung stehende Teil der Spritzgussform möglichst selektiv aktiv erwärmt wird. Dies kann insbesondere durch Induktion, durch Stromfluss oder durch Heizelemente erfolgen, die mit diesem Teil der Spritzgussform in Kontakt stehen. Dass weitere Teile der Spritzgussform durch dieses Erhitzen durch Wärmeübertragung ebenfalls aufgeheizt werden können, ist hierfür nicht von Belang, da im Allgemeinen ein Wärmegradient erzeugt wird, wobei die mit dem Reaktivgemisch in Kontakt stehende Oberfläche der Spritzgussform eine höhere Temperatur aufweist, als die Oberfläche der Spritzgussform, die nicht in Kontakt mit dem Reaktivgemisch steht.

Vorzugsweise wird die Temperatur mindestens eines Teiles der Spritzgussform um mindestens 5 °C, besonders bevorzugt um mindestens 20°C und ganz besonders bevorzugt um mindestens 30°C erhöht. Bei einer Erwärmung mittels eines indirekten Heizelements beziehen sich diese Angaben insbesondere auf die Temperatur, die ein Heizelement aufweist, welches mit mindestens einem Teil der Spritzgussform in Kontakt steht und dieses erwärmt. Bei Erwärmung mittels Induktion oder einem durch die Spritzgussform geleiteten Stromes beziehen sich diese Angaben auf die maximale Temperatur, die die Spritzgussform aufweist.

Diese Temperaturerhöhung kann bevorzugt innerhalb einer kurzen Zeitspanne erzielt werden. Bevorzugt kann diese Temperaturerhöhung innerhalb von 1 Minute, besonders bevorzugt innerhalb von 30 Sekunden und ganz besonders bevorzugt innerhalb von 5 Sekunden erfolgen. Hierbei sind besonders kurze Zeiten erwünscht, wobei diese jedoch von den technischen Gegebenheiten begrenzt werden.

Die Spritzgussform kann vor, während oder nach dem Einspritzen des Reaktivgemischs erhitzt werden. Besondere Vorteile können insbesondere dadurch erzielt werden, dass mit der Erwärmung der Spritzgussform bereits vor oder während dem Einspritzen des Reaktivgemischs begonnen wird. Vorzugsweise kann das Maximum der Heizleistung, durch die die zum Formteil ausgerichtete Oberfläche der Spritzgussform erwärmt wird, vorzugsweise innerhalb eines Bereichs liegen der zum Zeitpunkt der minimalen Temperatur des unbeschichteten Formkörpers beginnt und weniger als 3 Sekunden, vorzugsweise weniger als 1 Sekunde nach dem Einspritzen des Reaktivgemischs endet. Gemäß einem besonderen Aspekt der vorliegenden Erfindung kann das Maximum der Heizleistung, durch die die zum Formteil ausgerichtete Oberfläche der Spritzgussform erwärmt wird, vor oder während dem Einspritzen des Reaktivgemischs erreicht werden. Durch diese Ausgestaltung gelingt es überraschend besonders rissarme Oberflächen auf den Formteilen zu erhalten, die sich besonders leicht entformen lassen.

Weiterhin können der Beginn und die Geschwindigkeit der Polymerisation (Härtung) des Reaktivgemischs durch die Wahl der Art und des Anteils des thermischen Initiators sowie durch die Wahl der Werkzeugtemperatur eingestellt werden. Darüber hinaus kann der Beginn der Härtung durch die Wahl der in der Reaktionsmischung enthaltenen mehrfunktionalen (Meth)acrylate gesteuert werden.

Gemäß einer zweckmäßigen Abwandlung des erfindungsgemäßen Verfahrens kann ein vorgehärtetes Reaktivgemisch nach der thermischen Härtung bei einer Temperatur im Bereich von 0°C bis 120°C, bevorzugt 10°C bis 40°C durch Bestrahlung gehärtet werden. Hierfür können übliche Strahlungsquellen eingesetzt werden, je nach Art des Initiators. Bevorzugt kann die Härtung insbesondere durch UV-Strahlung erfolgen, wobei die Wellenlänge der eingesetzten Strahlungsquelle insbesondere im Bereich von 100 nm bis 500 nm, bevorzugt 200 bis 400 nm liegen kann.

Anlagen, die im Prinzip eine Beschichtung mit einem Reaktivgemisch ermöglichen, sind unter anderem in den zuvor beschriebenen Dokumenten JP 11300776 und JP 2005074896 dargelegt. Zu Offenbarungszwecken werden diese Druckschriften in diese Anmeldung eingefügt. Allerdings werden in diesen Druckschriften keine diese Anlagen beschrieben, bei denen die Temperatur zumindest eines Teiles der Spritzgussform innerhalb von 1 Minute um mehr als 10°C verändert werden kann. Derartige Anlagen sind neu und daher ebenfalls Gegenstand der vorliegenden Erfindung. Bevorzugt ermöglicht die Anlage eine Änderung der Temperatur zumindest eines Teiles der Spritzgussform innerhalb von 5 Sekunden um mehr als 10°C, besonders bevorzugt mehr als 20°C.

Diese Ausgestaltungen werden unter anderem dadurch erzielt, dass mindestens ein Teil der Spritzgussform durch elektrischen Strom erwärmt werden kann. Spritzgussanlagen mit einer elektrisch beheizbaren Spritzgussform sind unter anderem in EP-A-1 065 037, WO96/29188 und US 5,234,627 dargelegt, welche zu Offenbarungszwecken eingefügt werden. Das Erwärmen kann hierbei direkt durch Aufheizen der Oberfläche mit Strom erfolgen oder indirekt durch Induktion oder ein Heizelement, welches mit der formgebenenden Oberfläche der Spritzgussform verbunden ist. Hierbei sind indirekte Verfahren bevorzugt. Geeignet ist insbesondere ein keramische Heizelement oder ein Peltierelement. Hierbei kann die Spritzgussform durch ein oder mehrere der zuvor dargelegten Verfahren erhitzt werden.

Die Erwärmung einer Spritzgussform durch Induktion ist unter anderem in der Druckschrift DE 201 21 777 U1 dargelegt. Zu Zwecken der Offenbarung wird diese Druckschrift in die vorliegende Anmeldung eingefügt.

Peltierelemente sind elektrothermische Wandler, welche bei Stromdurchfluss eine Temperaturdifferenz oder bei Temperaturdifferenz einen Stromfluss erzeugen. Eine übliche Abkürzung für Peltierelemente und Peltier-Kühler ist TEC (von engl. Thermoelectric Cooler). Diese Elemente können kommerziell erhalten werden.

Keramische Heizelemente umfassen eine Keramik, die durch Strom erwärmt werden kann. Keramik bezeichnet hierin anorganische Materialien, die unter anderem Oxide, Nitride und ähnliche Stoffe umfassen können. Beispiele für derartige Materialien sind unter anderem in WO 00/34205, DE 35 12 483, DE 35 19 437 und DE 37 34 274. Diese Druckschriften werden zu Zwecken der Offenbarung in diese Anmeldung eingefügt.

Gemäß einer besonderen Ausführungsform kann die Einspritzdüse, über die das Reaktivgemisch in die Spritzgussform gespritzt wird, mit einem Peltierelement ausgerüstet werden. Hierdurch werden überraschende Vorteile hinsichtlich der Standzeiten der Anlage erzielt. Diese lassen sich insbesondere dadurch erzielen, dass die zur Spritzgussform hingewandte Seite der Düse erwärmt und die von der Spritzgussform abgewandte Seite der Düse gekühlt wird.

Eine bevorzugte Anlage zur Durchführung des erfindungsgemäßen Verfahrens weist eine Kühlung auf, über die zumindest ein Teil der Spritzgussform gekühlt werden kann. Die Kühlung kann insbesondere durch bekannte Kühlmittel, beispielsweise Luft, Wasser oder ähnliche Medien erfolgen. Bevorzugt wird das Kühlmittel durch Kanäle geleitet, die in der Nähe der erwärmten Spritzgussform verläuft. Bei einer Heizung der Spritzgussform durch Induktion können die Kühlkanäle unmittelbar durch die Spritzgussform verlaufen oder an der Oberfläche vorgesehen sein, die gegenüber der Oberfläche der Spritzgussform angeordnet ist, mit der das Kunststoffformteil geformt wird. Bei einer indirekten Heizung der Spritzgussform, beispielsweise durch keramische Elemente oder durch Peltierelemente können Kühlmittelkanäle zwischen dem Heizelement und der Oberfläche der Spritzgussform vorgesehen sein, mit der das Kunststoffformteil geformt wird. Falls die Spritzgussform unmittelbar durch Strom erhitzt wird, können die Kühlmittelkanäle unmittelbar durch die Spritzgussform verlaufen oder an der Oberfläche vorgesehen sein, die gegenüber der Oberfläche der Spritzgussform angeordnet ist, mit der das Kunststoffformteil geformt wird.

Die vorliegende Erfindung stellt insbesondere beschichtete Formkörper zur Verfügung, die ein hervorragendes Eigenschaftsprofil aufweisen und daher vielfältig eingesetzt werden können.

Der Formkörper zeichnet sich insbesondere durch eine hohe Kratzfestigkeit aus, die beispielsweise mit einem Reibradtest bestimmt werden kann. Von besonderem Interesse sind insbesondere beschichtete, transparente Formkörper, deren Haze-Wert nach einem Kratzfestigkeitstest gemäß ASTM 1044 (12/05) (Auflage 500g, Anzahl der Zyklen = 100) um höchstens 10%, besonders bevorzugt um höchstens 6% und ganz besonders bevorzugt um höchstens 3% zunimmt. Die Kratzfestigkeit gemäß ASTM 1044 (12/05) (Auflage 500g, Anzahl der Zyklen = 100) kann darüber hinaus durch die Abnahme des Glanzes bei 20° gemessen werden. Hierbei zeigen bevorzugte beschichtete Formkörper eine Abnahme des Glanzes bei 20° nach einem Kratzfestigkeitstest gemäß ASTM 1044 (12/05), (Auflage 500g, Anzahl der Zyklen = 100) von höchstens 10%, besonders bevorzugt um höchstens 6% und ganz besonders bevorzugt um höchstens 3%. Die Abnahme des Glanzes bei 20° kann nach DIN EN ISO 2813 bestimmt werden. Durch die Bestimmung einer Glanzänderung kann beispielsweise die Kratzfestigkeit von eingefärbten Formkörpern oder von eingefärbten Beschichtungen gemessen werden.

Darüber hinaus zeigen die erfindungsgemäßen Formkörper eine hervorragende Haftfestigkeit der Beschichtung, die gemäß dem Gitterschnitttest untersucht werden kann. Hierzu wird die Beschichtung kreuzweise angeritzt und dadurch in schachbrettartige Einzelsegmente unterteilt. Im Allgemeinen werden hierbei mindestens 20 Einzelsegmente, bevorzugt mindestens 25 Einzelsegmente gebildet. Der Abstand der Linien beträgt hierbei in etwa 1 mm. Dann wird ein 25 mm breites Klebeband aufgeklebt und wieder abgezogen. Die Ablösekraft des Klebebandes pro cm², gemessen gemäß DIN EN ISO 2409 beträgt ca. 10N je 25mm Breite. Zur Durchführung des Versuchs kann beispielsweise ein Klebeband verwendet werden, das unter der Handelsbezeichnung Typ 4104 von der Firma Tesa erhältlich ist. Bevorzugt erzielen die beschichteten Formkörper eine Bewertung gemäß dem Gitterschnitttest von höchstens 1, besonders bevorzugt von 0. Eine Bewertung von 1 erzielen die beschichteten Formkörper falls nicht wesentlich mehr als 5% der Einzelsegmente abgelöst werden. Falls keines der Einzelsegmente (0%) abgelöst werden, erzielen die beschichteten Formkörper eine Bewertung von 0.

Darüber hinaus sind bevorzugte Beschichtungen frei von Rissen und zeigen eine hohe Chemikalienbeständigkeit. So widerstehen die Beschichtungen insbesondere Ethanol, Ethanol / Wasser (70/30), Benzin, Pankreatin, Schwefelsäure (1 %ig), wobei durch Kontakt mit diesen Verbindungen keine Spannungsrisse gebildet werden.

Bevorzugte Formkörper können ein E-Modul größer oder gleich 1200 MPa, vorzugsweise größer oder gleich 1600 MPa gemäß ISO 527 (bei 1 mm/min) aufweisen. Des Weiteren können erfindungsgemäße Formkörper eine Schlagzähigkeit nach Charpy größer oder gleich 10 kJ / m², vorzugsweise größer oder gleich 15 kJ / m²gemäß ISO179 zeigen.

Darüber hinaus können Kunststoffe mit Zugfestigkeiten größer oder gleich 55, vorzugsweise größer oder gleich 60 gemäß DIN 53 455-1-3 (bei 1 mm/min) erzeugt werden, die eine ausgezeichnete Kratzfestigkeit aufweisen.

Besonders überraschend ist, dass der kratzfeste Formkörper einen Transmissionsgrad τ_{D65} ≥ 88 %, vorzugsweise ≥ 90 % gemäß DIN 5036 Teil 3 aufweisen kann. Durch die zuvor aufgeführten mechanischen und/oder optischen Eigenschaften des Formkörpers soll keine Beschränkung der Erfindung erfolgen. Diese Angaben dienen vielmehr zur Darstellung der besonders hervorragenden Eigenschaften des Formkörpers, die bei gleichzeitig guter Kratzfestigkeit erzielt werden können.

Des Weiteren können die Formkörper der vorliegenden Erfindung eine ausgezeichnete Bewitterungsstabilität zeigen. So beträgt die Bewitterungsstabilität gemäß dem Xenon-Test bevorzugt mindestens 1.000 Stunden, besonders bevorzugt mindestens 2.000 Stunden. Diese Stabilität kann beispielsweise durch eine geringe Abnahme der Transmission oder durch eine geringe Abnahme der Kratzfestigkeit bestimmt werden. Von besonderem Interesse sind insbesondere beschichtete Formkörper, deren Transmission nach 2000 Stunden Xenon-Bestrahlung höchstens um 10%, besonders bevorzugt um höchstens 5% abnimmt, bezogen auf den Transmissionswert zu Beginn der Bestrahlung. Darüber hinaus können bevorzugte Formkörper eine Zunahme des Haze-Wertes nach einem Kratzfestigkeitstest gemäß ASTM 1044 (12/05) (Auflage 500g, Anzahl der Zyklen = 100) auf höchstens 25%, besonders bevorzugt auf höchstens 15% nach einer Xenon-Bestrahlung von 2000 Stunden zeigen. Des Weiteren ist die Bestimmung der Kratzfestigkeit nach einer Xenonbestrahlung auch über die Abnahme des Glanzes möglich. Hierbei zeigen bevorzugte beschichtete Formkörper eine Abnahme des Glanzes bei 20° nach einem Kratzfestigkeitstest gemäß ASTM 1044 (12/05), (Auflage 500g, Anzahl der Zyklen = 100) von höchstens 25%, besonders bevorzugt um höchstens 20% und ganz besonders bevorzugt um höchstens 15% nach einer Xenon-Bestrahlung von 2000 Stunden.

Darüber hinaus zeigen bevorzugte Beschichtungen, die mit einer erfindungsgemäßen Beschichtungsmittel erhalten wurden, eine hohe Beständigkeit in einem Klimawechseltest, wobei nur eine geringe Rissbildung trotz einer Verformung des Grundkörpers auftritt. Vorzugsweise kann zur Durchführung des Klimawechseltests das in dem Dokument "BMW PR 303 - Teil d" dargestellte Belastungsprogramm eingesetzt werden.

## Patentansprüche

1. Verfahren zur Herstellung von beschichteten Formkörpern, bei dem man eine Formmasse in eine Spritzgussform spritzt und unter Erhalt eines Formkörpers abkühlt, die Spritzgussform so verändert, dass ein Zwischenraum zwischen zu beschichtender Oberfläche des Formkörpers und der Innenoberfläche der Spritzgussform entsteht, den entstandenen Zwischenraum durch Spritzguss mit einem Reaktivgemisch füllt, **dadurch gekennzeichnet, dass** zur Härtung des Reaktivgemischs die Temperatur mindestens eines Teiles der Spritzgussform innerhalb von 1 Minute um mindestens 5 °C erhöht wird.

2. Verfahren gemäß Anspruch 1, **dadurch gekennzeichnet, dass** ein Teil der Spritzgussform erwärmt wird, der mit der Reaktivmischung in Berührung steht, und ein Teil der Spritzgussform, der nicht mit der Reaktivmischung in Berührung steht, nicht erwärmt wird.

3. Verfahren gemäß mindestens einem der vorhergehenden Ansprüche, **dadurch gekennzeichnet, dass** die Temperatur mindestens eines Teiles der Spritzgussform um mindestens 5 °C, bevorzugt um mindestens 30 °C erhöht wird.

4. Verfahren gemäß mindestens einem der vorhergehenden Ansprüche, **dadurch gekennzeichnet, dass** die Formmasse mindestens 50 Gew.-% Polymethylmethacrylat, Polymethacrylmethylimid und/oder Polymethylmethacrylat-Copolymere umfasst.

5. Verfahren gemäß Anspruch 4, **dadurch gekennzeichnet, dass** das Reaktivgemisch mindestens 40 Gew.-%, bevorzugt mindestens 60 Gew.-% an (Meth)acrylaten mit mindestens zwei Doppelbindungen umfasst.

6. Verfahren gemäß mindestens einem der vorhergehenden Ansprüche, **dadurch gekennzeichnet, dass** das Reaktivgemisch mindestens ein (Meth)acrylat mit drei oder mehr Doppelbindungen und/oder dass der Anteil an (Meth)acrylaten mit drei oder mehr Doppelbindungen mindestens 25 Gew.-%, bezogen auf das Gewicht des Reaktivgemischs, beträgt.

7. Verfahren gemäß mindestens einem der vorhergehenden Ansprüche, **dadurch gekennzeichnet, dass** das Reaktivgemisch eine dynamische Viskosität im Bereich von 1 bis 200 mPa*s bei 25°C aufweist.

8. Verfahren gemäß mindestens einem der vorhergehenden Ansprüche, **dadurch gekennzeichnet, dass** das Reaktivgemisch 0,03 Gew.-% bis 5 Gew.-% thermischen Initiator und/oder 0,01 Gew.-% bis 3 Gew.-% Fotoinitiator, jeweils bezogen auf das Gewicht des Reaktivgemischs, umfasst.

9. Verfahren gemäß mindestens einem der vorhergehenden Ansprüche, **dadurch gekennzeichnet, dass** die Dicke der Beschichtung im Bereich von 5 µm bis 75 µm liegt.

10. Verfahren gemäß mindestens einem der vorhergehenden Ansprüche, **dadurch gekennzeichnet, dass** die Formmasse bei einer Temperatur im Bereich von 220 bis 330°C in die Spritzgussform gespritzt wird, und /oder dass die Formmasse auf eine Temperatur im Bereich von 70 bis 150°C, bevorzugt von 70 bis 90°C abgekühlt wird, bevor das Reaktivgemisch in den Zwischenraum einspritzt wird.

11. Verfahren gemäß mindestens einem der vorhergehenden Ansprüche, **dadurch gekennzeichnet, dass** das Reaktivgemisch bei einer Temperatur im Bereich von 95 bis 180°C, bevorzugt von 100 bis 140°C in der Spritzgussform thermisch gehärtet wird.

12. Verfahren gemäß mindestens einem der vorhergehenden Ansprüche, **dadurch gekennzeichnet, dass** das thermisch gehärtete Reaktivgemisch bei einer Temperatur im Bereich von 10 bis 40°C durch Bestrahlung, bevorzugt durch UV-Bestrahlung, gehärtet wird.

13. Verfahren gemäß mindestens einem der vorhergehenden Ansprüche, **dadurch gekennzeichnet, dass** mindestens ein Teil der Spritzgussform durch elektrischen Strom erwärmt wird.

14. Verfahren gemäß mindestens einem der vorhergehenden Ansprüche, **dadurch gekennzeichnet, dass** das Maximum der Heizleistung, durch die die zum Formteil ausgerichtete Oberfläche der Spritzgussform erwärmt wird, innerhalb eines Bereichs liegt der zum Zeitpunkt der minimalen Temperatur des unbeschichteten Formkörpers beginnt und weniger als 1 Sekunden nach dem Einspritzen des Reaktivgemischs endet.

15. Verfahren gemäß mindestens einem der vorhergehenden Ansprüche, **dadurch gekennzeichnet, dass** das Maximum der Heizleistung, durch die die zum Formteil ausgerichtete Oberfläche der Spritzgussform erwärmt wird, vor oder während dem Einspritzen des Reaktivgemischs erreicht wird.

16. Anlage zur Durchführung eines Verfahrens gemäß mindestens einem der Ansprüche 1 bis 15, wobei die Anlage eine veränderbare Spitzgussform aufweist, **dadurch gekennzeichnet, dass** die Anlage derart ausgestaltet ist, dass die Temperatur zumindest eines Teiles der Spritzgussform innerhalb von 1 Minute um mehr als 10°C verändert werden kann.

17. Anlage gemäß Anspruch 16, **dadurch gekennzeichnet, dass** die Einspritzdüse, über die das Reaktivgemisch in die Spritzgussform gespritzt wird, mit einem Peltierelement ausgerüstet ist.

18. Anlage gemäß Anspruch 16, **dadurch gekennzeichnet, dass** die Spritzgussform durch Induktion, ein keramisches Heizelement oder ein Peltierelement erwärmt werden kann, und/oder dass zumindest ein Teil der Spritzgussform gekühlt werden kann

## Claims

1. Process for the production of coated mouldings, by injecting a moulding composition into an injection mould and cooling the composition to obtain a moulding, and altering the injection mould in such a way as to produce an intermediate space between a surface to be coated of the moulding and the inner surface of the injection mould, and using injection moulding to charge a reactive mixture to the resultant intermediate space, **characterized in that** the temperature of at least a portion of the injection mould is increased by at least 5°C within one minute for the curing of the reactive mixture.

2. Process according to Claim 1, **characterized in that** one portion of the injection mould is heated and is in contact with the reactive mixture, and one portion of the injection mould is not heated and is not in contact with the reactive mixture.

3. Process according to at least one of the preceding claims, **characterized in that** the temperature of at least one portion of the injection mould is increased by at least 5°C, preferably by at least 30°C.

4. Process according to at least one of the preceding claims, **characterized in that** the moulding composition comprises at least 50% by weight of polymethyl methacrylate, of poly(meth)acrylimide and/or of polymethyl methacrylate copolymers.

5. Process according to Claim 4, **characterized in that** the reactive mixture comprises at least 40% by weight, preferably at least 60% by weight of (meth)acrylates having at least two double bonds.

6. Process according to at least one of the preceding claims, **characterized in that** the reactive mixture comprises at least one (meth)acrylate having three or more double bonds and/or **in that** the proportion of (meth)acrylates having three or more double bonds is at least 25% by weight, based on the weight of the reactive mixture.

7. Process according to at least one of the preceding claims, **characterized in that** the dynamic viscosity of the reactive mixture is in the range from 1 to 200 mPa*s at 25°C.

8. Process according to at least one of the preceding claims, **characterized in that** the reactive mixture comprises from 0.03% by weight to 5% by weight of thermal initiator and/or from 0.01% by weight to 3% by weight of photoinitiator, in each case based on the weight of the reactive mixture.

9. Process according to at least one of the preceding claims, **characterized in that** the thickness of the coating is in the range from 5 µm to 75 µm.

10. Process according to at least one of the preceding claims, **characterized in that** the moulding composition is injected at a temperature in the range from 220 to 330°C into the injection mould, and/or **in that** the moulding composition is cooled to a temperature in the range from 70 to 150°C, preferably from 70 to 90°C, before the reactive mixture is injected into the intermediate space.

11. Process according to at least one of the preceding claims, **characterized in that** the reactive mixture is thermally cured at a temperature in the range from 95 to 180°C, preferably from 100 to 140°C in the injection mould.

12. Process according to at least one of the preceding claims, **characterized in that** the thermally cured reactive mixture is cured at a temperature in the range from 10 to 40°C by irradiation, preferably by UV irradiation.

13. Process according to at least one of the preceding claims, **characterized in that** at least a portion of the injection mould is heated by electrical current.

14. Process according to at least one of the preceding claims, **characterized in that** the maximum of the heating power which heats the injection-mould surface facing towards the moulding lies within a period which begins at the juncture of the minimum temperature of the uncoated moulding and ends less than one second after injection of the reactive mixture.

15. Process according to at least one of the preceding claims, **characterized in that** the maximum of the heating power which heats the injection-mould surface facing towards the moulding is achieved prior to or during the injection of the reactive mixture.

16. System for the conduct of a process according to at least one of Claims 1 to 15, where the system has an alterable injection mould, **characterized in that** the system has been configured in such a way that the temperature of at least a portion of the injection mould can be altered by more than 10°C within one minute.

17. System according to Claim 16, **characterized in that** the injection nozzle by way of which the reactive mixture is injected into the injection mould has been equipped with a Peltier element.

18. System according to Claim 16, **characterized in that** the injection mould can be heated by induction, a ceramic heating element or a Peltier element, and/or **in that** at least a portion of the injection mould can be cooled.

## Revendications

1. Procédé de fabrication de corps moulés revêtus, selon lequel un matériau de moulage est injecté dans un moule de moulage par injection et refroidi pour obtenir un corps moulé, le moule de moulage par injection est modifié de manière à former un espace intermédiaire entre la surface à revêtir du corps moulé et la surface intérieure du moule de moulage par injection, l'espace intermédiaire formé est rempli avec un mélange réactif par moulage par injection, **caractérisé en ce que** la température d'au moins une partie du moule de moulage par injection est augmentée d'au moins 5 °C en 1 minute pour le durcissement du mélange réactif.

2. Procédé selon la revendication 1, **caractérisé en ce qu'**une partie du moule de moulage par injection qui est en contact avec le mélange réactif est chauffée et une partie du moule de moulage par injection qui n'est pas en contact avec le mélange réactif n'est pas chauffée.

3. Procédé selon au moins l'une quelconque des revendications précédentes, **caractérisé en ce que** la température d'au moins une partie du moule de moulage par injection est augmentée d'au moins 5 °C, de préférence d'au moins 30 °C.

4. Procédé selon au moins l'une quelconque des revendications précédentes, **caractérisé en ce que** le matériau de moulage comprend au moins 50 % en poids de polyméthacrylate de méthyle, de poly(méth)acrylimide et/ou de copolymères de polyméthacrylate de méthyle.

5. Procédé selon la revendication 4, **caractérisé en ce que** le mélange réactif comprend au moins 40 % en poids, de préférence au moins 60 % en poids, de (méth)acrylates contenant au moins deux doubles liaisons.

6. Procédé selon au moins l'une quelconque des revendications précédentes, **caractérisé en ce que** le mélange réactif comprend au moins un (méth)acrylate contenant trois doubles liaisons ou plus et/ou **en ce que** la proportion de (méth)acrylates contenant trois doubles liaisons ou plus est d'au moins 25 % en poids, par rapport au poids du mélange réactif.

7. Procédé selon au moins l'une quelconque des revendications précédentes, **caractérisé en ce que** le mélange réactif présente une viscosité dynamique dans la plage allant de 1 à 200 mPa*s à 25 °C.

8. Procédé selon au moins l'une quelconque des revendications précédentes, **caractérisé en ce que** le mélange réactif comprend 0,03 % en poids à 5 % en poids d'un initiateur thermique et/ou 0,01 % en poids à 3 % en poids d'un photoinitiateur, à chaque fois par rapport au poids du mélange réactif.

9. Procédé selon au moins l'une quelconque des revendications précédentes, **caractérisé en ce que** l'épaisseur du revêtement se situe dans la plage allant de 5 µm à 75 µm.

10. Procédé selon au moins l'une quelconque des revendications précédentes, **caractérisé en ce que** le matériau de moulage est injecté dans le moule de moulage par injection à une température dans la plage allant de 220 à 330 °C et/ou **en ce que** le matériau de moulage est refroidi à une température dans la plage allant de 70 à 150 °C, de préférence de 70 à 90 °C, avant l'injection du mélange réactif dans l'espace intermédiaire.

11. Procédé selon au moins l'une quelconque des revendications précédentes, **caractérisé en ce que** le mélange réactif est durci thermiquement dans le moule de moulage par injection à une température dans la plage allant de 95 à 180 °C, de préférence de 100 à 140 °C.

12. Procédé selon au moins l'une quelconque des revendications précédentes, **caractérisé en ce que** le mélange réactif durci thermiquement est durci par exposition à un rayonnement, de préférence par exposition à un rayonnement UV, à une température dans la plage allant de 10 à 40 °C.

13. Procédé selon au moins l'une quelconque des revendications précédentes, **caractérisé en ce qu'**au moins une partie du moule de moulage par injection est chauffée par un courant électrique.

14. Procédé selon au moins l'une quelconque des revendications précédentes, **caractérisé en ce que** le maximum de la puissance de chauffage par laquelle la surface du moule de moulage par injection orientée vers la pièce moulée est chauffée se trouve dans une plage qui commence au moment de la température minimale du corps moulé non revêtu et finit moins de 1 seconde après l'injection du mélange réactif.

15. Procédé selon au moins l'une quelconque des revendications précédentes, **caractérisé en ce que** le maximum de la puissance de chauffage par laquelle la surface du moule de moulage par injection orientée vers la pièce moulée est chauffée est atteint avant ou pendant l'injection du mélange réactif.

16. Installation pour la réalisation d'un procédé selon au moins l'une quelconque des revendications 1 à 15, l'installation comprenant un moule de moulage par injection modifiable, **caractérisée en ce que** l'installation est configurée de manière à ce que la température d'au moins une partie du moule de moulage par injection puisse être modifiée de plus de 10 °C en 1 minute.

17. Installation selon la revendication 16, **caractérisée en ce que** la buse d'injection par laquelle le mélange réactif est injecté dans le moule de moulage par injection est équipée d'un élément Peltier.

18. Installation selon la revendication 16, **caractérisée en ce que** le moule de moulage par injection peut être chauffé par induction, par un élément chauffant céramique ou par un élément Peltier et/ou **en ce qu'**au moins une partie du moule de moulage par injection peut être refroidie.
